# EUROPÄISCHE PATENTANMELDUNG

(11) **EP 1 745 999 A2**
(43) Veröffentlichungstag der Anmeldung: **24.01.2007**
(21) Anmeldenummer: 06013890.6
(22) Anmeldetag: 05.07.2006
(51) Int. Cl.: B60T 7/04, G05G 1/14

(54) **Bremsanlage für ein Kraftfahrzeug und Verfahren zum Betreiben einer derartigen Bremsanlage**

(30) Priorität: 22.07.2005 DE 102005034326
(71) Anmelder: AUDI AG, 85045 Ingolstadt (DE); Bayerische Motoren Werke Aktiengesellschaft, 80809 München (DE); Dr.Ing. h.c.F. Porsche Aktiengesellschaft, 70435 Stuttgart (DE); Volkswagen AG, 38440 Wolfsburg (DE)
(72) Erfinder: Balnus, Christian, 85080 Gaimersheim (DE); Guttenberger, Thomas, 85051 Ingolstadt (DE); Karajlovic, Alexander, 80995 München (DE); Ehrmaier, Rudolf, 81927 München (DE); Burgbacher, Martin H., 73728 Esslingen (DE); Hartl, Mathias, 71394 Kernen (DE); Hunn, Thomas, 75417 Mühlacker (DE); Kirchner, Walter, 75378 Bad Liebenzell (DE); Krauss, Andreas, 38551 Ribbesbüttel (DE); Germershausen, Detlef, 38110 Braunschweig (DE)
(74) Vertreter: Patzelt, Heike Anna Maria

(57) **Zusammenfassung**

Die vorliegende Erfindung betrifft eine Bremsanlage für ein Kraftfahrzeug mit einer Betriebsbremse (2) und einem Betätigungselement (21) zum Betätigen der Betriebsbremse (2) wobei abhängig von der Betätigungsart des Betätigungselements (21) der Betriebsbremse (2) zumindest ein elektrisches Auslösesignal erzeugbar ist, durch welches eine Notbremsungssituation erkennbar ist und durch welches ein Auslösen einer Notbremsung einleitbar ist. Die Notbremsung kann durch Elemente der Betriebsbremse (2) und/oder der Feststellbremse (3) und/oder einer Hilfsbremse durchgeführt werden. Die Erfindung betrifft auch ein Verfahren zum Betreiben einer Bremsanlage eines Kraftfahrzeugs.

## Beschreibung

Die Erfindung betrifft eine Bremsanlage für ein Kraftfahrzeug mit einer Betriebsbremse und einem Betätigungselement zum Betätigen dieser Betriebsbremse. Des Weiteren betrifft die Erfindung ein Verfahren zum Betreiben einer Bremsanlage eines Kraftfahrzeugs mit einer Betriebsbremse, welche mittels einem Betätigungselement betätigt wird.

In vielen Kraftfahrzeugen ist ein hydraulischer Bremsassistent ausgebildet, welcher abhängig von der Geschwindigkeit des vom Fahrzeugnutzer in der Bremsanlage verursachten Vordruckanstiegs auslöst und den Bremsdruck in der Regel über ein Hydroaggregat des elektronischen Stabilisierungsprogramms (ESP) erhöht. Unabhängig davon kann bei manchen Kraftfahrzeugen mit elektromechanischen Parkbremsen über deren Bedienelement eine Notbremsung ausgeführt werden, bei der anstelle von Aktuatoren der elektromechanischen Parkbremse die Betriebsbremse verwendet wird. Ein wesentlicher Nachteil dabei ist es, dass der Fahrzeugnutzer beim Versagen der Betriebsbremse in einer Notbremsungssituation auf eine andere Bedienung bzw. Aktivierung einer Notbremsung zurückgreifen muss.

Aus der EP 0 741 066 B1 ist ein Kraftfahrzeug mit einem Betriebs- und einer Feststellbremsanlage beschrieben. Jede der beiden Bremsanlagen wird über eine ihr zugeordnete Betätigungseinrichtung betätigt. Darüber hinaus weist das Kraftfahrzeug einen Druckerzeuger zum Erzeugen von Bremsdruck auf, welcher mit einer Reibungsbremse derart zusammenwirkt, dass durch Betätigen einer Ansteuerungseinrichtung der Druckerzeuger auf die Reibungsbremse wirkt und hierdurch eine Notbremsung eingeleitet werden kann. Für die Notbrems- und Feststellbremsanlage ist eine Ansteuerungs-/Betätigungseinrichtung vorgesehen, welche bei einer Kraftfahrzeuggeschwindigkeit größer 0 durch die Ansteuerung des Druckerzeugers eine Notbremsung einleitet, wobei bei einer Kraftfahrzeuggeschwindigkeit gleich 0 die Feststellbremse aktiviert wird. Bei der bekannten Betriebs- und Feststellbremsanlage wird somit im Falle einer bereits aufgetretenen Notbremsungssituation die Betriebsbremse als Reibungsbremse bzw. Notbremse verwendet, welche über einen Taster der Feststellbremse bedienbar ist.

Des Weiteren ist aus der deutschen Offenlegungsschrift DE 43 15 877 A1 eine Bremseinrichtung für Kraftfahrzeuge mit einer hydraulischen Betriebsbremse und einer als Notbremse aktivierbaren Hilfsbremse bekannt. Die hydraulische Betriebsbremse ist über ein Bremspedal betätigbar, wobei die Hilfsbremse bei Ausfall der Betriebsbremse durch das Bremspedal der Betriebsbremse als Notbremse aktivierbar ist. Das Bremspedal soll dabei im Falle einer bereits aufgetretenen bzw. erkannten Notbremsungssituation nicht mehrmals getreten werden müssen, sondern die Hilfsbremse soll direkt über einen mechanisch zu betätigenden Zusatzhub am Bremspedal aktiviert werden. Ist eine derartige Notbremsungssituation eingetreten, so ist dieser mechanische Zusatzhub am Bremspedal derartig ausgestaltet, dass bei Überschreiten des Betätigungsweges des Bremspedals über einen vorgegebenen Schwellwert, welcher im Abstand vor der Endanschlagstellung des Bremspedals ausgebildet ist, eine Notbremsung derartig durchgeführt wird, dass die Hilfsbremse aktiviert wird und durch diese eine dosierbare Notbremsung durch weiteres Betätigen des Bremspedals ermöglicht wird.

Bei den bekannten Ausgestaltungen der Betriebsbremsanlagen bzw. Feststellbremsanlagen werden Bremseinrichtungen beschrieben, welche Vorgehensweisen zur Durchführung einer Notbremsung vorschlagen, bei denen jedoch davon ausgegangen wird, dass eine Notbremsungssituation bereits festgestellt und erkannt wurde. Um ein derartiges Erkennen einer solchen Notbremsungssituation durchführen zu können, sind jedoch grundsätzlich nochmals weitere Schritte erforderlich. Diese sind jedoch im Stand der Technik nicht näher erläutert und vorausgesetzt. Indem bei den bekannten Bremseinrichtungen auch ein derartiges Erkennen und Feststellen einer Notbremsungssituation vorab durchgeführt werden muss und im Anschluss daran auch noch die jeweils erläuterten Vorgehensweisen zum Durchführen einer derartigen Notbremsung sehr aufwändig gestaltet sind, dauert bei den bekannten Bremseinrichtungen das Ausführen einer Notbremsung relativ lange. Darüber hinaus sind die Vorgehensweisen relativ aufwändig und komplex konzipiert und es ist erforderlich, eine Mehrzahl an Vorgängen durchzuführen, um eine erforderliche Notbremsung zu bewirken. Im Fall einer derartigen Notbremsungssituation ist somit ein Fahrzeugnutzer einer Situation ausgesetzt, welche erfordert, dass er eine Mehrzahl an unterschiedlichen Betätigungselementen bedient oder eine Mehrzahl an unterschiedlichen Vorgehensweisen, welche auch oftmals ein untypisches Verhalten des Fahrzeugsnutzers erfordern, durchführt. In derartigen Stresssituationen ist somit der Fahrzeugnutzer auch noch dadurch belastet, sich genau daran zu erinnern, welche Schritte er nacheinander durchführen muss, um eine Notbremsung tätigen zu können. Dies kann dazu führen, dass das Tätigen einer Notbremsung lange bzw. zu lange dauert oder im Extremfall gar nicht durchgeführt werden kann. Daraus resultiert ein erhebliches Gefährdungspotential für den Fahrzeugnutzer selbst sowie auch anderer Verkehrsteilnehmer.

Daher ist es Aufgabe der vorliegenden Erfindung eine Bremsanlage für ein Kraftfahrzeug sowie ein Verfahren zum Betreiben einer derartigen Bremsanlage zu schaffen, welche bzw. welches ein schnelles und sicheres Durchführen einer Notbremsung gewährleistet und des Weiteren aufwandsarm realisiert werden kann. Insbesondere ist es Aufgabe der Erfindung eine Bremsanlage für ein Kraftfahrzeug sowie ein Verfahren zum Betreiben dieser Bremsanlage bereitstellen zu können, mit der bzw. mit dem eine Notbremsung durch intuitives und typisches Verhalten eines Fahrzeugnutzers in einer derartigen Gefahrensituation erreicht werden kann.

Diese Aufgabe wird durch eine Bremsanlage, welche die Merkmale nach Patentanspruch 1 aufweist, und ein Verfahren zum Betreiben einer derartigen Bremsanlage, welches die Merkmale nach Patentanspruch 12 aufweist, gelöst.

Die in der gegenwärtigen Kraftfahrzeugtechnologie üblichen Kraftfahrzeugbremsanlagen haben aufgrund der gesetzlichen Bestimmungen im wesentlichen drei Funktionen zu erfüllen, wobei dies die Betriebs-, Feststell- und Hilfs/Notbremsfunktionen sind. Dazu weisen die bekannten Bremsanlagen in der Regel zwei voneinander unabhängige Bremssysteme auf. Die Betriebsbremse wird im häufigsten Fall durch Betätigen eines Bremspedals aktiviert und weist bereits vielfach elektrohydraulische Hilfsmittel auf, welche beispielsweise das Blockieren der Fahrzeugräder verhindern. Des Weiteren besitzen heutige Kraftfahrzeuge eine weitere, vollkommen unabhängige Feststellbremsanlage, welche vielfach durch einen Handbremshebel mit einem Seilzug, welcher mechanisch auf die Bremsen der Hinterachse zuspannend einwirkt, betätigt wird. Die Feststellbremsanlage soll dabei auch während der Fahrt funktionsfähig sein, damit bei einem Defekt der Betriebsbremse das Kraftfahrzeug noch zum Stillstand gebracht werden kann.

Eine erfindungsgemäße Bremsanlage für ein Kraftfahrzeug umfasst eine Betriebsbremse und ein Betätigungselement zum Betätigen der Betriebsbremse. Ein wesentlicher Gedanke der Erfindung besteht darin, dass abhängig von der Betätigungsart des Betätigungselements der Betriebsbremse zumindest ein elektrisches Auslösesignal erzeugbar ist, durch welches eine Notbremsungssituation erkennbar ist und durch welches ein Auslösen einer Notbremsung einleitbar ist. Durch die erfindungsgemäße Bremsanlage kann erreicht werden, dass eine Notbremsungssituation schnell und zuverlässig erkannt wird und sofort eine Notbremsung einleitbar ist. Dazu ist gemäß der Erfindung lediglich nur noch die Betätigungsart des Betätigungselements der Betriebsbremse zu berücksichtigen, so dass dadurch erreicht werden kann, dass durch ein ohnehin vorhandenes Betätigungselement und eine im Wesentliche ohnehin durch den Fahrzeugnutzer durchzuführende Betätigungsart auch automatisch und ohne zeitliche Verzögerung bereits durch die Art, wie das Betätigungselement betätigt wird, eine Notbremsungssituation erkannt wird. Somit wird durch typisches Verhalten des Fahrzeugnutzers beim Betätigen des Betätigungselements eine Notbremsungssituation erkannt und sofort eine Notbremsung eingeleitet. Sowohl das Erkennen der Notbremsungssituation als auch das Auslösen einer Notbremsung ist dabei von einem elektrischen Auslösesignal abhängig, welches dann erzeugt wird, wenn die Betätigungsart des Betätigungselements der Betriebsbremse durch einen Fahrzeugnutzer einen nicht störungsfreien Betrieb der Bremsanlage charakterisiert. Durch die Erfindung wird somit in automatischer Weise das Erkennen der Notbremsungssituation und das Einleiten der Notbremsung selbst gekoppelt, wodurch im Extremfall erreicht werden kann, dass durch das erzeugte elektrische Auslösesignal bereits eine Notbremsung eingeleitet wird, ohne dass der Fahrzeugnutzer bisher überhaupt bemerkt hat, dass die Bremsanlage nicht störungsfrei funktioniert. Durch die Erfindung kann somit erreicht werden, dass durch typische Betätigungsarten des Betätigungselements des Fahrzeugnutzers, und somit durch Betätigungsarten welche ohnehin beim Durchführen einer Bremsung des Fahrzeugs erforderlich sind, erkannt wird, ob eine Notbremsungssituation vorliegt und automatisch dann eine Notbremsung eingeleitet werden muss. Bei der erfindungsgemäßen Bremsanlage muss der Fahrzeugnutzer in vorteilhafter Weise nicht mehr selbst zusätzliche Betätigungselemente im Falle einer bereits aufgetretenen Notbremsungssituation aktivieren, um eine Notbremsung nachfolgend einzuleiten.

In vorteilhafter Weise weist die Bremsanlage einen hydraulischen Druckerzeuger auf, welcher durch das elektrische Auslösesignal zum selbstständigen Aufbau eines Bremsdrucks aktivierbar ist. Auch dadurch kann erreicht werden, dass bei einer automatisch erkannten Notbremsungssituation auch ein Auslösen einer Notbremsung ohne zusätzliches Tätigwerden eines Fahrzeugnutzers durchgeführt werden kann. Automatisch wird quasi beim Erkennen, dass ein elektrisches Auslösesignal eine Notbremsungssituation charakterisiert und daraufhin eine Notbremsung einleitbar ist, der hydraulische Druckerzeuger insbesondere durch das elektrische Auslösesignal zum Aufbau eines Bremsdrucks aktiviert, wobei dieser Aufbau des Bremsdrucks durch den hydraulischen Druckerzeuger selbstständig erfolgt. Somit ist auch zum Aufbau des Bremsdrucks durch den hydraulischen Druckerzeuger keine zusätzliche Betätigung von weiteren Elementen oder zusätzliche Handlungsschritte erforderlich. Auch dadurch kann erreicht werden, dass das Durchführen einer Notbremsung zeitoptimiert durchgeführt werden kann.

In bevorzugter Weise ist der Aufbau des Bremsdrucks derart durchgeführt, dass dadurch das Kraftfahrzeug durch eine vorgebbare Verzögerung abbremsbar ist. In vorteilhafter Weise ist somit die Verzögerung derart dosierbar, dass ein zielgerichtetes und optimiertes Abbremsen des Kraftfahrzeugs erreicht werden kann.

Eine Betätigungsart des Betätigungselements der Betriebsbremse, welche ein eine Notbremsungssituation kennzeichnendes Auslösesignal generiert, kann dann vorliegen, wenn ein Verhältnis aus Betätigungsweg des Betätigungselements zur Verzögerung des Kraftfahrzeugs einen vorgebbaren ersten Schwellwert überschreitet. In einer weiteren vorteilhaften Ausgestaltung kann dies auch dann alternativ oder ergänzend gegeben sein, wenn ein Verhältnis aus Betätigungskraft des Betätigungselements zur Verzögerung des Kraftfahrzeugs einen vorgebbaren zweiten Schwellwert überschreitet. Darüber hinaus kann dies alternativ oder ergänzend zu den oben genannten Möglichkeiten auch dann gegeben sein, wenn ein Verhältnis aus einer auf das Betätigungselement der Betriebsbremse ausgeübten Kraft und einem erreichten Vordruck der Bremsanlage einen dritten Schwellwert überschreitet.

In bevorzugter Weise ist das elektrische Auslösesignal auch dann erzeugbar, wenn ein Verhältnis aus einer auf das Betätigungselement der Betriebsbremse ausgeübten Kraft und einem erreichten Betätigungsweg des Betätigungselements einen vierten Schwellwert unterschreitet.

In vorteilhafter Weise ist ein Schaltelement in der Bremsanlage angeordnet, welches durch das Betätigen des Betätigungselements zum Erzeugen des elektrischen Auslösesignals aktivierbar ist, wobei das Aktivieren des elektrischen Auslösesignals durch das Schaltelement von zusätzlichen Bedingungen, welche eine Notbremsung bedingen, abhängig ist.

In vorteilhafter Weise ist ein Schaltelement in der Bremsanlage angeordnet, welches zum Auslösen des elektrischen Auslösesignals nur dann aktivierbar ist, wenn das einwandfreie Funktionieren des Betätigungselements der Betriebsbremse nicht gewährleistet ist.

Die Bremsanlage weist in vorteilhafter Weise eine weitere Bremse auf, insbesondere eine Feststellbremse, insbesondere eine elektromechanische Parkbremse, welche zumindest ein Betätigungsmittel umfasst, durch welche eine Notbremsung einleitbar ist, wobei zur Einleitung einer Notbremsung zusätzlich dieses Betätigungsmittel der weiteren Bremse zu betätigen ist. In vorteilhafter Weise ist dabei das elektrische Auslösesignal abhängig von der Geschwindigkeit, mit der das Betätigungselement der Betriebsbremse betätigt wird, erzeugbar.

Durch die oben genannten Alternativen der Betätigungsart, durch die ein eine Notbremsungssituation charakterisierendes elektrisches Auslösesignal erzeugbar ist, sind somit Kriterien genannt, die einerseits zusätzlich zur bekannten Betätigungsmöglichkeit der Notbremsung über die Betätigung der weiteren Bremse, insbesondere einer elektromechanischen Parkbremse, erlauben, diese auch über das Betätigungselement, insbesondere einem Bremspedal, der Betriebsbremse auszulösen. Des Weiteren werden durch diese Alternativen Kriterien genannt, die es auch ermöglichen, ohne die Betätigung der Notbremsung über die weitere Bremse eine Notbremsungssituation zu erkennen und eine Notbremsung einzuleiten.

Bei einem erfindungsgemäßen Verfahren zum Betreiben einer Bremsanlage eines Kraftfahrzeugs mit einer Betriebsbremse, welche mittels einem Betätigungselement betätig wird, wird als wesentlicher Gedanke der Erfindung abhängig von der Betätigungsart des Betätigungselements der Betriebsbremse zumindest ein elektrisches Auslösesignal erzeugt. Durch dieses elektrische Auslösesignal wird eine Notbremsungssituation erkannt bzw. charakterisiert und durch dieses elektrische Auslösesignal wird ein Auslösen einer Notbremsung eingeleitet.

Durch die Erfindung kann erreicht werden, dass eine Notbremsung auch direkt über das Betätigungselement der Betriebsbremsanlage ausgelöst werden kann. Ähnlich den Auslösekriterien eines hydraulischen Bremsassistenten werden hierfür Kriterien definiert, die bei Betätigung des Betätigungselements der Betriebsbremse zur Auslösung der Notbremsung führen. Das Hydroaggregat bremst dann das Kraftfahrzeug mit vorgegebener Verzögerung durch selbstständigen Druckaufbau bei oder während einem Vorliegen eines oder mehrerer der oben genannten Kriterien ab.

Durch die Erfindung wird ein optimaler Kundennutzen erzielt, da die Notbremsungssituation automatisch erkannt wird, da eine derartige Notbremssituation durch bestimmte Bedingungen charakterisiert ist und gekennzeichnet ist und dies beim typischen Betätigen des Betätigungselements der Betriebsbremse durch einen Fahrzeugnutzer bereits detektiert werden kann. Somit erfolgt eine Auslösung bzw. ein Einleiten einer Notbremsung im Notfall intuitiv durch den Fahrzeugnutzer über das Betätigen des Betätigungselements der Betriebsbremse. Darüber hinaus kann bei der Erfindung eine Integration der Funktionen des Druckerzeugers bzw. des hydraulischen Bremsassistenten und der Notbremsfunktion erreicht werden. Des Weiteren kann eine Reduzierung der Komplexität der fremdkraftbetätigten Feststellbremse, insbesondere der elektromechanischen Parkbremse, erreicht werden. Ferner ist die Erfindung unabhängig von der Auslegung der Feststellbremse, insbesondere der elektromechanischen Parkbremse.

Die oben erläuterten Alternativen und Möglichkeiten, der Betätigungsarten des Betätigungselements der Betriebsbremse, durch welche ein eine Notbremsungssituation charakterisierendes elektrisches Auslösesignal erzeugbar ist, können auch in beliebiger Weise miteinander kombiniert werden oder parallel zueinander verwendet werden.

Vorteilhafte Ausgestaltungen der erfindungsgemäßen Bremsanlage sind, soweit durchführbar, auch als vorteilhafte Ausgestaltungen des erfindungsgemäßen Verfahrens anzusehen.

Es sei angemerkt, dass die oben erläuterten Alternativen zum Erzeugen eines elektrischen Auslösesignals lediglich beispielhaft sind und in keinster Weise abschließend genannt sind. In vielfältiger Weise können auch weitere zusätzliche Kriterien vorgesehen sein, welche eine Betätigungsart des Betätigungselements der Betriebsbremse charakterisieren, derart, dass dadurch ein elektrisches Auslösesignal, durch welches eine Notbremsungssituation erkennbar ist und durch welches ein Auslösen einer Notbremsung einleitbar ist, erzeugbar ist.

Die Notbremsung kann durch Elemente der Betriebsbremse und/oder der Feststellbremse und/oder einer Hilfsbremse durchgeführt werden.

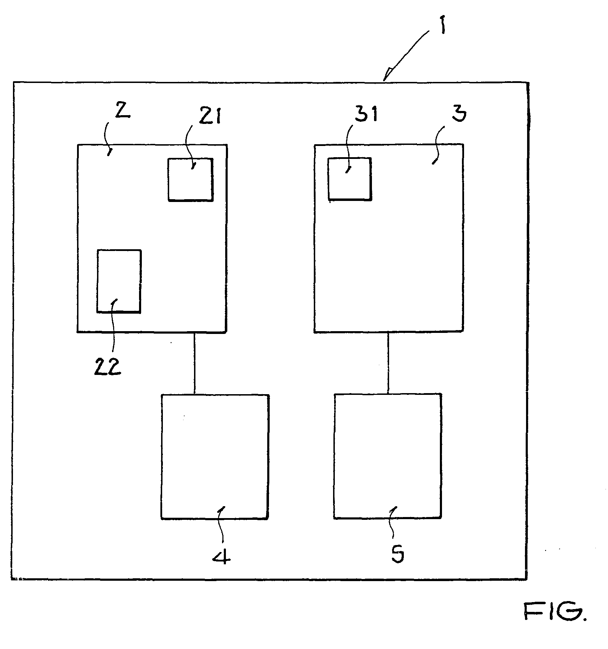

Ein Ausführungsbeispiel der Erfindung wird nachfolgend anhand einer schematischen Zeichnung näher erläutert. Die einzige Fig. 1 zeigt ein Blockschaltbild einer erfindungsgemäßen Bremsanlage für ein Kraftfahrzeug.

Wie in der Darstellung in Fig. 1 zu erkennen ist, sind lediglich die Elemente eingezeichnet, welche für das Verständnis der Erfindung wesentlich sind.

Im Ausführungsbeispiel umfasst eine erfindungsgemäße Bremsanlage 1 eine Betriebsbremse 2, welche ein Betätigungselement aufweist, dass im Ausführungsbeispiel als Bremspedal 21 ausgebildet ist. Des Weiteren umfasst die Bremsanlage 1 einen der Betriebsbremse 2 zugeordneten hydraulischen Druckerzeuger 22. Die erfindungsgemäße Bremsanlage 1 weist darüber hinaus eine Feststellbremse auf, welche im Ausführungsbeispiel als elektromechanische Parkbremse 3 ausgebildet ist. Auch die elektromechanische Parkbremse 3 weist ein Betätigungselement 31 auf. Die Betriebsbremse 2 ist mit einem ersten Steuergerät 4 und die elektromechanische Parkbremse 3 mit einem zweiten Steuergerät 5 elektrisch verbunden. Die Steuergeräte 4 und 5 können zur Kommunikation unmittelbar miteinander elektrisch verbunden sein oder über einen Kommunikationsbus miteinander elektrisch verbunden sein.

Da die Darstellung in Fig. 1 lediglich beispielhaft und schematisch ist, kann es auch vorgesehen sein, dass sowohl das Bremspedal 21 als auch das Betätigungselement 31 außerhalb der Blöcke, welche die Betriebsbremse 2 bzw. die elektromechanische Parkbremse 3 charakterisieren, angeordnet sind und elektrisch mit diesen verbunden sind. Darüber hinaus kann auch vorgesehen sein, dass der hydraulische Druckerzeuger 22 mit der elektromechanischen Parkbremse 3 verbunden ist.

Im gezeigten Ausführungsbeispiel wird ein elektrisches Auslösesignal dann erzeugt, wenn das Betriebsbremspedal 21 derart betätigt wird, dass ein Verhältnis aus dem Betätigungsweg des Bremspedals 21 zur Verzögerung des Kraftfahrzeugs einen vorgebbaren ersten Schwellwert überschreitet. Bei einer derartigen Betätigungsart des Bremspedals 21 durch einen Fahrzeugnutzer, welche somit auch eine typische Betätigung des Bremspedals 21 charakterisiert, wird somit abhängig von dieser Betätigungsart das elektrische Auslösesignal erzeugt, da dadurch eine Notbremsungssituation erkennbar ist und eine derartige dadurch charakterisiert ist. Des Weiteren wird durch das elektrische Auslösesignal ein Auslösen einer Notbremsung eingeleitet. Dabei wird dieses erzeugte elektrische Auslösesignal an das Steuergerät 4 übertragen, welches eine Notbremsung dadurch einleitet, dass es ein entsprechendes elektrisches Auslösesignal an den hydraulischen Druckerzeuger 22 derart weiterleitet, dass dieser hydraulische Druckerzeuger 22 zum selbstständigen Aufbau des Bremsdrucks aktivierbar ist.

Im gezeigten Ausführungsbeispiel wird der Bremsdruck durch den hydraulischen Druckerzeuger 22 derart aufgebaut, dass dadurch das Kraftfahrzeug durch eine vorgebbare Verzögerung abbremsbar ist.

In einem weiteren Ausführungsbeispiel kann vorgesehen sein, dass das elektrische Auslösesignal dann erzeugbar ist, wenn eine Geschwindigkeit, mit der das Bremspedal 21 betätigt wird, einen Geschwindigkeitsschwellwert übersteigt. Auch dadurch kann erkannt werden, dass eine Notbremsungssituation gegeben sein könnte.

Die Erfindung ermöglicht in ihrer gesamten Allgemeinheit eine deutlich verbesserte Erkennung einer Notbremsungssituation und einer damit verbundenen und auszulösenden Notbremsung. Bereits das Erkennen einer Notbremsungssituation wird bei der Erfindung quasi automatisch durchgeführt und anhand von elektrischen Auslösesignalen erkannt, welche dadurch erzeugt werden, dass bei typischen und im wesentlichen auch stets erforderlichen Betätigungsarten des Betätigungselements der Betriebsbremse erkannt wird, ob eine Anormalität beim Durchführen dieser Betätigung im Vergleich zu einem störungsfreien Fall auftritt. Ist eine derartige Anormalität erkannt, wird auch automatisch durch das erzeugte elektrische Auslösesignal eine Notbremsung eingeleitet. Die erfindungsgemäße Bremsanlage ist somit quasi in ihrem Funktionsprinzip im Hinblick auf das Bestehen einer Notbremsungssituation und das Einleiten einer Notbremsung selbst erkennend und gewährleistet dadurch ein sehr sicheres und zuverlässiges Erkennen einer derartigen Notbremsungssituation und darüber hinaus auch ein sehr schnelles und sicheres Einleiten einer gegebenenfalls einzuleitenden Notbremsung.

## Patentansprüche

1. Bremsanlage für ein Kraftfahrzeug mit einer Betriebsbremse (2) und einem Betätigungselement (21) zum Betätigen der Betriebsbremse (2)
**dadurch gekennzeichnet, dass**
abhängig von der Betätigungsart des Betätigungselements (21) der Betriebsbremse (2) zumindest ein elektrisches Auslösesignal erzeugbar ist, durch welches eine Notbremsungssituation erkennbar ist und durch welches ein Auslösen einer Notbremsung einleitbar ist.

2. Bremsanlage für ein Kraftfahrzeug,
**dadurch gekennzeichnet, dass**
die Bremsanlage (1) einen hydraulischen Druckerzeuger (22) aufweist, welcher durch das elektrische Auslösesignal zum selbstständigen Aufbau eines Bremsdrucks aktivierbar ist.

3. Bremsanlage nach Anspruch 2,
**dadurch gekennzeichnet, dass**
der Aufbau des Bremsdrucks derart durchführbar ist, dass **dadurch** das Kraftfahrzeug durch eine vorgebbare Verzögerung abbremsbar ist.

4. Bremsanlage nach einem der vorhergehenden Ansprüche,
**dadurch gekennzeichnet, dass**
das elektrische Auslösesignal dann erzeugbar ist, wenn die Betätigungsart derart ist, dass ein Verhältnis aus Betätigungsweg des Betätigungselements (21) zur Verzögerung des Kraftfahrzeugs einen vorgebbaren ersten Schwellwert überschreitet.

5. Bremsanlage nach einem der vorhergehenden Ansprüche,
**dadurch gekennzeichnet, dass**
das elektrische Auslösesignal dann erzeugbar ist, wenn die Betätigungsart derart ist, dass ein Verhältnis aus Betätigungskraft des Betätigungselements (21) zur Verzögerung des Kraftfahrzeugs einen vorgebbaren zweiten Schwellwert überschreitet.

6. Bremsanlage nach Anspruch 2,
**dadurch gekennzeichnet, dass**
das elektrische Auslösesignal dann erzeugbar ist, wenn die Betätigungsart derart ist, dass ein Verhältnis aus einer auf das Betätigungselement (21) der Betriebsbremse (2) ausgeübten Kraft und einem erreichten Vordruck der Bremsanlage einen dritten Schwellwert überschreitet.

7. Bremsanlage nach einem der vorhergehenden Ansprüche,
**dadurch gekennzeichnet, dass**
das elektrische Auslösesignal dann erzeugbar ist, wenn die Betätigungsart derart ist, dass ein Verhältnis aus einer auf das Betätigungselement (21) der Betriebsbremse (2) ausgeübten Kraft und einem erreichten Betätigungsweg des Betätigungselements (21) einen vierten Schwellwert unterschreitet.

8. Bremsanlage nach einem der vorhergehenden Ansprüche,
**dadurch gekennzeichnet, dass**
ein Schaltelement in der Bremsanlage angeordnet ist, welches durch das Betätigen des Betätigungselements (21) zum Erzeugen des elektrischen Auslösesignals aktivierbar ist, wobei das Aktivieren des elektrischen Auslösesignals durch das Schaltelement von zusätzlichen Bedingungen, welche eine Notbremsung bedingen, abhängig ist.

9. Bremsanlage nach einem der vorhergehenden Ansprüche,
**dadurch gekennzeichnet, dass**
ein Schaltelement in der Bremsanlage angeordnet ist, welches zum Auslösen des elektrischen Auslösesignals nur dann aktivierbar ist, wenn das einwandfreie Funktionieren des Betätigungselements (21) der Betriebsbremse (2) nicht gewährleistet ist.

10. Bremsanlage nach einem der vorhergehenden Ansprüche,
**dadurch gekennzeichnet, dass**
die Bremsanlage (1) eine weitere Bremse aufweist, insbesondere eine Feststellbremse, insbesondere eine elektromechanische Parkbremse (3), welche zumindest ein Betätigungsmittel (31) aufweist, durch welches eine Notbremsung einleitbar ist.

11. Bremsanlage nach Anspruch 10,
**dadurch gekennzeichnet, dass**
das elektrische Auslösesignal abhängig von der Geschwindigkeit, mit der das Betätigungselement (21) der Betriebsbremse (2) betätigt wird, erzeugbar ist.

12. Verfahren zum Betreiben einer Bremsanlage eines Kraftfahrzeugs mit einer Betriebsbremse (2), welche mittels einem Betätigungselement (21) betätigt wird,
**dadurch gekennzeichnet, dass**
abhängig von der Betätigungsart des Betätigungselements (21) der Betriebsbremse (2) zumindest ein elektrisches Auslösesignal erzeugt wird, durch welches eine Notbremsungssituation charakterisiert wird und durch welches ein Auslösen einer Notbremsung eingeleitet wird.
